# FASCICULE DE BREVET EUROPEEN

(11) **EP 4 139 859 B1**
(45) Date de publication et mention de la délivrance du brevet: **21.02.2024**
(21) Numéro de dépôt: 21742455.5
(22) Date de dépôt: 24.06.2021
(51) Int. Cl.: G06Q 10/04, G06Q 50/04, A41H 43/00, B26D 5/00, B26F 1/38

(54) **PROCÉDÉ ET SYSTÈME POUR LA COUPE AUTOMATIQUE DE PIÈCES DANS UN MATÉRIAU SOUPLE CONDITIONNÉ SOUS FORME DE ROULEAU**
VERFAHREN UND SYSTEM ZUM AUTOMATISCHEN SCHNEIDEN VON TEILEN AUS EINEM FLEXIBLEN MATERIAL, DAS IN ROLLENFORM VERPACKT IST
METHOD AND SYSTEM FOR AUTOMATIC CUTTING OF PIECES IN A FLEXIBLE MATERIAL PACKAGED IN ROLL FORM

(30) Priorité: 29.06.2020 FR 2006825
(43) Date de publication de la demande: 01.03.2023
(73) Titulaire: Lectra, 75016 Paris (FR)
(72) Inventeur: BODIVIT, Stéphane, 33610 Cestas (FR); JÉZÉQUEL, Loïc, 33170 Gradignan (FR); GUERRERO, Christelle, 33610 Cestas (FR)
(74) Mandataire: Cabinet Beau de Loménie
(86) Numéro de dépôt international: PCT/FR2021/051159
(87) Numéro de publication internationale: WO 2022/003277

(56) Documents cités:
- US-A1- 2019 018 628

## Description

### Domaine Technique

L'invention se rapporte au domaine général de la coupe automatique de pièces dans un matériau souple conditionné sous forme de rouleau. Elle concerne plus particulièrement la gestion d'évènements déclencheurs intervenant lors de la coupe sur les pièces et susceptibles d'affecter la qualité et le rendement de la coupe.

Des domaines d'application de l'invention sont notamment les industries de l'habillement et de l'ameublement.

### Technique antérieure

EP 0 759 708 décrit un procédé pour la coupe automatique de pièces dans un tissu à motif anticipant le préambule des revendications 1 et 16.

La coupe automatique de pièces dans un matériau souple s'effectue typiquement sur une machine de coupe à convoyeur pilotée à partir d'un poste de commande.

Le processus de coupe se déroule de la manière suivante. L'opérateur reçoit sur le poste de commande une liste de travaux de coupe à réaliser qui a été préparée en amont. Chacun de ces travaux contient toutes les informations nécessaires à la réalisation d'une coupe, à savoir : un placement des pièces à découper et une matière sur laquelle la coupe sera réalisée.

Les matières utilisées (matériau souple) sont généralement conditionnées sous forme de rouleaux qui sont chargés sur le module d'approvisionnement de la machine de coupe. La matière est ensuite acheminée progressivement grâce au convoyeur sur les différents modules de la machine de coupe, à savoir : un module de coupe au niveau duquel se déroule la coupe des pièces, et un module de déchargement où l'opérateur récupère les pièces découpées. Dans le cas d'une machine de coupe traitant des tissus à motif, il est également prévu un module d'acquisition de la matière pour scanner celle-ci en amont du module de découpe. Une fois la matière acheminée sur le module de coupe, le système connaît la position relative des pièces les unes par rapport aux autres grâce à un placement préalablement élaboré et stocké au niveau du travail de coupe. Afin de couper correctement ces pièces sur la matière, l'opérateur doit également procéder au positionnement de ce placement sur la matière.

L'élaboration du placement des pièces est réalisée de façon à optimiser au maximum la consommation de la matière mais aussi pour obtenir un résultat de coupe de haute qualité. Pour cela, des contraintes peuvent être imposées par le support de coupe. Par exemple, la largeur de laize exploitable peut imposer une limitation de la zone de placement des pièces. De même, le type de matière utilisé peut imposer une distance minimum de proximité entre certaines pièces.

En plus de ces contraintes imposées par le support de coupe, des contraintes supplémentaires peuvent être imposées par les designers et modélistes au moment de la phase de création. Il peut s'agir par exemple du respect du droit-fil du tissu qui impose des valeurs de rotation définies, ou, dans le cas de tissus à motif, des contraintes de liaison qui imposent une dépendance de position entre les pièces.

Une fois que l'opérateur lance la production sur le poste de pilotage de la machine de coupe, le système va activer le module d'approvisionnement automatiquement à partir des données matière contenues dans le premier travail de coupe de la liste. Sur le module d'approvisionnement, l'opérateur va pouvoir charger le rouleau correspondant à la matière qui lui est donnée Suivant les options de la machine, l'opérateur pourra préciser le sens et la face visible de la matière. Cette action se fera soit sur le poste de pilotage, soit sur le module d'approvisionnement.

Une fois cette étape validée, la matière est acheminée jusqu'au module de coupe tout en passant par l'éventuel module d'acquisition. Ce dernier permet de numériser la matière étalée sur la table de coupe et de donner les caractéristiques réelles de la matière à l'opérateur.

Une fois la matière acheminée sur le module de coupe, l'opérateur positionne le placement au bon endroit sur celle-ci à l'aide de l'image fournie par le module d'acquisition ou avec un outil de pointage embarqué sur la tête de coupe et la coupe peut commencer.

Lors de la production, plusieurs différences entre les informations théoriques (données au préalable dans le travail de coupe) et les informations réelles (constatées par l'opérateur ou propres au rouleau en cours de découpe) peuvent apparaître et rendre l'élaboration du placement caduque. Ces différences, si elles ne sont pas prises en compte, peuvent avoir une conséquence sur la qualité du résultat de la coupe ou sur l'efficience obtenues. Pour ce faire, plusieurs adaptations du placement en cours de production peuvent être réalisées.

Par ailleurs, lors de la découpe d'un placement, il se peut que le rouleau de matière se termine et que la matière disponible ne soit plus suffisante pour terminer la découpe du placement entamé.

Pour remédier à ce problème, l'une des solutions connues consiste à demander à l'opérateur de montrer la fin du rouleau courant pour scinder le placement en deux parties de façon à éviter la zone de « changement » entre les rouleaux.

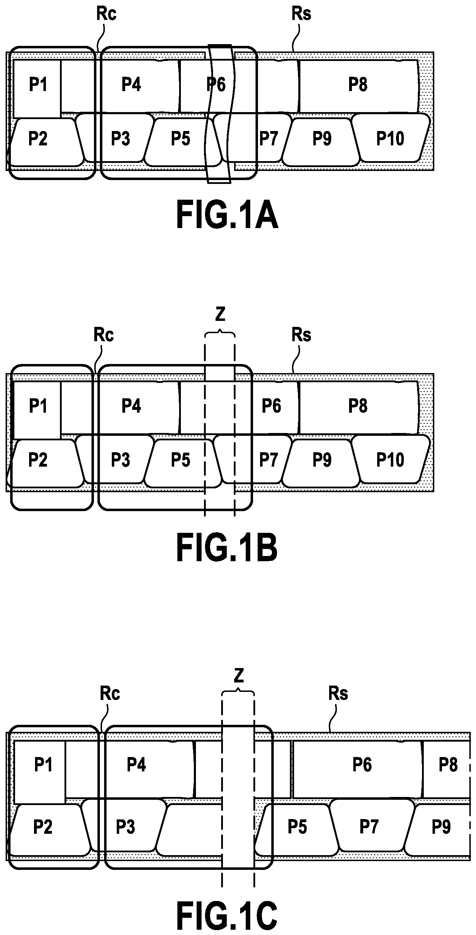

Cette solution de l'art antérieur est illustrée par les figures 1A à 1C. Sur la figure 1A, sont représentées une pluralité de pièces P1 à P10 d'un placement en cours de découpe. Les pièces P1 à P3 ont déjà été découpées dans le rouleau courant Rc (et qui ont atteint le module de déchargement), la pièce P4 est en cours de coupe, tandis que les pièces P5 à P10 ne sont pas encore découpées (ou partiellement coupées, voire totalement coupées). Par ailleurs, on remarque sur cette figure 1A que les pièces P5 et P6 sont positionnées à cheval sur la fin du rouleau courant Rc (sur lequel les pièces P1 à P4 sont découpées) et les pièces P7 à P10 sont positionnées au-delà de la fin du rouleau courant.

A partir de ces informations, l'opérateur délimite une zone Z de changement de rouleau représentée sur la figure 1B. Comme illustré à la figure 1C, les pièces P5 à P7 qui sont situées dans cette zone Z ne seront pas découpées sur le rouleau courant Rc et vont être placées sur le rouleau suivant Rs pour y être découpées. Plus précisément, le placement des pièces P1 à P10 est scindé en deux avec les pièces P5 à P10 qui vont être décalées dans le placement pour être découpées dans le rouleau suivant Rs.

Cette solution de l'art antérieur permet de limiter le nombre de pièces se trouvant sur le changement de rouleau et qui devraient être rejetées. Cependant, comme parfaitement illustré par la figure 1C, le fait de devoir scinder le placement existant en deux parties peut entraîner une perte importante de matière.

Une telle solution est également utilisée pour éviter des zones de défaut de la matière : le début de la zone de défaut est assimilé à la fin du rouleau courant, et la fin de la zone de défaut au début du rouleau suivant, l'espace entre les deux rouleaux étant ainsi considéré comme une zone de défaut.

En pratique, si un défaut est détecté avant la découpe des pièces sur cette zone de défaut, l'opérateur peut vouloir éviter de découper des pièces qui ne seront pas exploitables par la suite. La solution connue dont il dispose consiste à scinder le placement en deux parties comme décrit ci-dessus pour le problème de fin de rouleau afin d'éviter la zone de défaut. Cette solution présente donc les mêmes inconvénients qu'énoncé précédemment, à savoir une perte importante de matière.

Par ailleurs, lors du déchargement des pièces, l'opérateur peut remarquer un défaut sur une pièce la rendant inutilisable. Dans ce cas, il a la possibilité de la « rejeter ». Une fois le placement entièrement coupé et déchargé, l'ensemble des pièces rejetées est alors recoupé en les affectant à un nouveau placement.

Cette solution permet de recouper les pièces ayant un problème de qualité et donc de produire de façon exploitable la totalité des pièces souhaitées. Mais plus le nombre de pièces rejetées est faible, plus le risque de perte de matière est important. De plus, le fait de devoir attendre le nouveau placement pour recouper ces pièces rejetées peut entraîner une perte de temps de production.

De manière plus générale, le placement élaboré en amont de la production et donné dans le travail de coupe est le plus souvent suffisant dans le processus de coupe. Cependant, il arrive fréquemment que ce placement doive être modifié pour tenir compte des problèmes évoqués ci-dessus. Aujourd'hui, les solutions proposées pour remédier à ces problèmes consistent en des adaptations du placement initial existant : la position des pièces est légèrement décalée ou encore la pièce est rejetée pour être redécoupée dans un nouveau placement supplémentaire.

Ces adaptations ont l'avantage d'éviter des problèmes de qualité. En contrepartie, le placement modifié engendre une perte conséquente de matière et une durée supplémentaire de production.

### Exposé de l'invention

La présente invention a donc pour but de proposer un processus de coupe qui ne présente pas les inconvénients précités lorsqu'un évènement déclencheur intervient au cours de la coupe du placement.

Conformément à l'invention, ce but est atteint grâce à un procédé pour la coupe automatique de pièces dans un matériau souple conditionné sous forme de rouleau, comprenant les étapes successives de :
a) élaboration d'un placement initial pour une liste de pièces à découper dans le matériau souple ;
b) étalement d'au moins une couche de matériau souple sur une table de coupe ;
c) démarrage de la coupe automatique des pièces dans le matériau étalé sur la table de coupe selon le placement initial ;
d) au cours de la coupe du placement initial, à réception d'un évènement déclencheur pour lequel le placement d'au moins l'une des pièces n'est plus adapté à l'environnement de coupe ou pour lequel la liste des pièces du placement initial doit être modifiée, élaboration d'une liste de pièces à conserver ; et
e) élaboration automatique d'un nouveau placement prenant en compte la position des pièces à conserver et calculant de nouvelles positions pour tout ou partie des autres pièces - appelées pièces à repositionner - sans prendre en compte leurs positions dans le placement initial.

Le procédé selon l'invention est remarquable en ce qu'il prévoit, en cas de réception d'un évènement déclencheur au cours de la coupe du placement, d'élaborer automatiquement une liste de pièces à conserver, puis d'élaborer un nouveau placement différent du placement initial, ce nouveau placement prenant en compte la position des pièces à conserver et calculant de nouvelles positions pour tout ou partie des autres pièces à repositionner.

Ainsi, en cas de détection d'une fin de rouleau ou d'un défaut de coupe par exemple, le procédé selon l'invention propose d'effectuer un re-calcul du placement de tout ou partie des autres pièces à repositionner pour générer un nouveau placement optimisé permettant d'importants gains de matière. Par « nouveau placement », on entend ici un placement des pièces à repositionner dans leur globalité qui est élaboré sans tenir compte de la position des pièces telles que définies dans le placement initial. En particulier, ce nouveau placement n'est pas qu'une simple optimisation du placement initial.

De plus, le procédé selon l'invention permet d'obtenir d'importants gains de productivité dans la mesure où il est possible de conserver un temps de coupe minimum au cours duquel le nouveau placement est généré, ce qui évite tout arrêt de la production.

De préférence, l'étape e) est suivie d'une étape f) de coupe automatique des pièces dans le matériau étalé sur la table de coupe selon le nouveau placement.

Le nouveau placement élaboré à l'étape e) peut comprendre tout ou partie des pièces du placement initial restant encore à découper. Dans ce cas, le nouveau placement élaboré à l'étape e) peut comprendre en outre une ou plusieurs pièces pour lesquelles le placement n'est plus adapté à l'environnement de coupe.

De préférence également, l'étape d) comprend la détermination du nombre des pièces à conserver restant encore à découper en fonction d'une évaluation de leur temps de coupe et du temps alloué au calcul du nouveau placement. Dans ce cas, le temps alloué au calcul du nouveau placement est avantageusement inférieur à l'évaluation du temps de coupe des pièces à conserver restant encore à découper.

De préférence encore, la sélection des pièces du nouveau placement parmi l'ensemble des pièces du placement initial restant encore à découper est réalisée en respectant d'éventuelles contraintes de placement desdites pièces.

L'événement déclencheur peut être choisi parmi : une détection de la fin du rouleau sur lequel est conditionné le matériau étalé sur la table de coupe, une détection d'un défaut sur le matériau étalé sur la table de coupe, et une détection d'un défaut sur une pièce découpée qui nécessite qu'elle soit recoupée.

Lorsque l'évènement déclencheur consiste en la détection de la fin du rouleau sur lequel est conditionné le matériau étalé sur la table de coupe, l'étape e) peut comprendre l'établissement d'un premier placement de pièces sur la fin du rouleau, et un second placement des pièces restantes sur un autre rouleau de matériau.

Lorsque l'évènement déclencheur consiste en la détection d'un défaut sur le matériau étalé sur la table de coupe, l'étape e) peut comprendre l'exclusion de la zone du matériau étalé sur laquelle est présent le défaut pour établir le nouveau placement.

Lorsque l'évènement déclencheur consiste en la détection d'un défaut sur une pièce découpée qui nécessite qu'elle soit recoupée, l'étape e) peut comprendre l'ajout de la pièce à défaut au nouveau placement.

De façon avantageuse, le nouveau placement de l'étape e) est élaboré de façon à minimiser toute perte de productivité. A cet effet, l'étape e) peut être réalisée sans interruption de la coupe des pièces à conserver restant à découper selon le placement initial.

De façon avantageuse également, l'étape e) d'élaboration du nouveau placement est réalisée de manière itérative afin d'obtenir un taux d'efficience le plus élevé possible.

L'étape c) peut comprendre une étape préalable de modification du placement initial pour générer un placement réel des pièces sur le matériau étalé qui prend en compte les caractéristiques réelles du matériau.

L'invention a également pour objet un système pour la coupe automatique de pièces dans un matériau souple conditionné sous forme de rouleau, comprenant :
- des moyens d'élaboration d'un placement initial d'une liste de pièces à découper dans le matériau souple ;
- une table de coupe sur laquelle peut être étalée au moins une couche de matériau souple ;
- des moyens de coupe automatique des pièces dans le matériau étalé sur la table de coupe selon le placement initial ;
- des moyens de réception au cours de la coupe du placement initial d'un évènement déclencheur pour lequel le placement d'au moins l'une des pièces n'est plus adapté à l'environnement de coupe ou pour lequel la liste des pièces du placement initial doit être modifiée ; et
- des moyens d'élaboration automatique d'une liste de pièces à conserver et d'un nouveau placement prenant en compte la position des pièces à conserver et calculant de nouvelles positions pour tout ou partie des autres pièces - appelées pièces à repositionner - sans prendre en compte leurs positions dans le placement initial.

### Brève description des dessins

[Fig. 1A-1C] Les figures 1A à 1C déjà décrites illustrent un exemple de gestion d'une fin de rouleau selon l'art antérieur.
[Fig. 2] La figure 2 est une vue schématique des différents modules d'un système de coupe pour la mise en oeuvre du procédé selon l'invention.
[Fig. 3] La figure 3 est un ordinogramme représentant différentes étapes du procédé selon l'invention.
[Fig. 4A-4B] Les figures 4A et 4B illustrent un exemple de mise en oeuvre du procédé selon l'invention à la détection de fin de rouleau.
[Fig. 5A-5B] Les figures 5A et 5B illustrent un exemple de mise en oeuvre du procédé selon l'invention à la détection d'un défaut sur le matériau.
[Fig. 6A-6B] Les figures 6A et 6B illustrent un exemple de mise en oeuvre du procédé selon l'invention à la détection d'un défaut sur une pièce découpée qui nécessite d'être recoupée.
[Fig. 7A-7B] Les figures 7A et 7B illustrent un autre exemple de mise en oeuvre du procédé selon l'invention à la détection d'un défaut sur une pièce découpée qui nécessite d'être recoupée.
[Fig. 8A-8C] Les figures 8A à 8C illustrent un exemple de mise en oeuvre de l'étape d) du procédé selon l'invention consistant à élaborer une liste de pièces à conserver.
[Fig. 9A-9C] Les figures 9A à 9C représentent différentes étapes d'un exemple de mise en oeuvre de l'étape e) du procédé selon l'invention consistant à élaborer un nouveau placement.

### Description des modes de réalisation

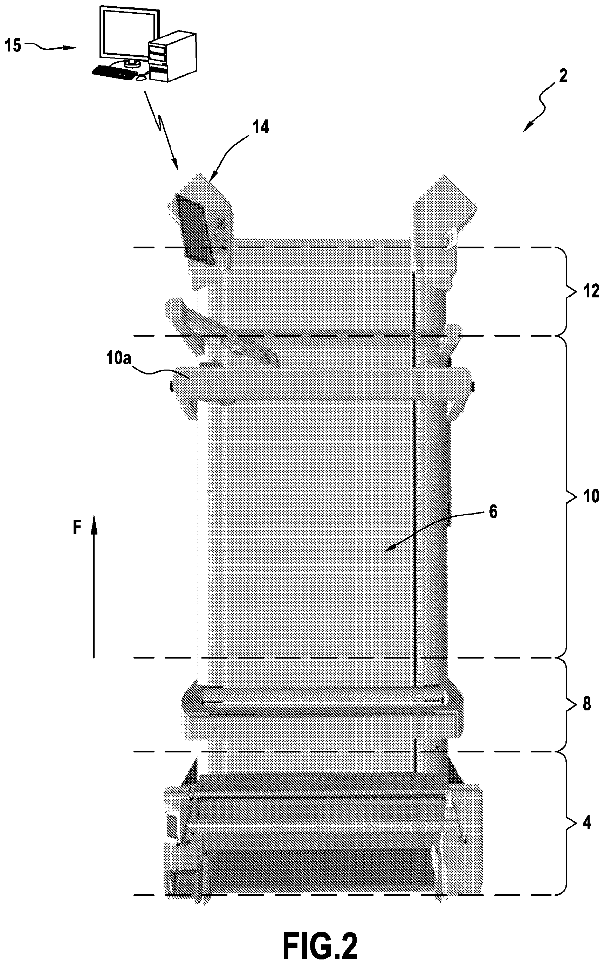

L'invention concerne la coupe automatique d'une pluralité de pièces dans un matériau souple conditionné sous forme de rouleau au moyen d'un système de coupe tel que celui représenté sur la figure 2.

De façon connue, un tel système de coupe 2 peut être constitué de quatre modules au travers desquels le matériau passe, à savoir (d'amont en aval dans le sens d'avance F de la matière): un module d'approvisionnement 4 positionné à une extrémité de la table de coupe 6, un module d'acquisition 8 (optionnel), un module de coupe 10, et un module de déchargement 12 positionné à une autre extrémité de la table de coupe.

Le module d'approvisionnement 4 est destiné à recevoir la matière à couper conditionnée sous forme de rouleau. Le module d'acquisition 8 est un module optionnel qui est destiné à scanner la matière étalée sur la table de coupe. Le module de coupe 10 comprend un portique mobile 10a sur lequel est monté un outil de coupe pour réaliser la coupe des pièces. Quant au module de déchargement 12, il est utilisé par l'opérateur pour décharger en dehors de la table les pièces découpées.

Le matériau souple à découper est entraîné sur la table de coupe 2 par un convoyeur depuis le module d'approvisionnement 4 jusqu'au module de déchargement 12. Le système de coupe 2 comprend également un poste de commande 14 permettant à l'opérateur de programmer un pilotage des différents modules en fonction du matériau à découper et des travaux de coupe à réaliser.

En pratique, l'opérateur reçoit sur le poste de commande 14 depuis une station de travail informatique 15 les informations nécessaires à réalisation d'une coupe, à savoir (pour chacun des travaux de coupe) : un placement initial d'une liste de pièces à découper, et un matériau sur lequel la coupe doit être réalisée.

Le matériau souple d'un travail de coupe représente le tissu dans lequel les pièces doivent être coupées. Chaque matériau est associé à un ensemble de caractéristiques techniques préalablement enregistrées (notamment la couleur, la description d'un éventuel motif, la largeur de laize, etc.).

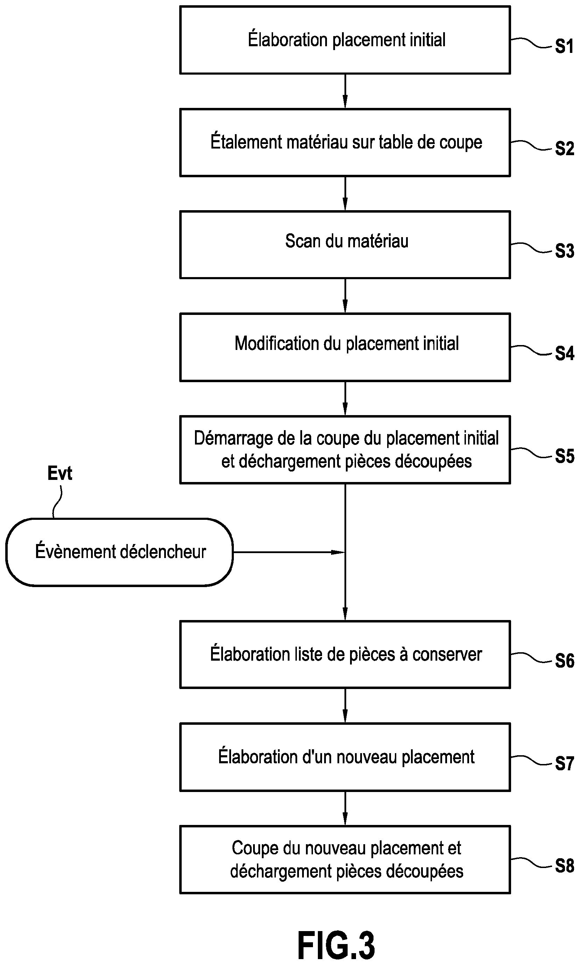

La figure 3 est un ordinogramme des différentes étapes du procédé selon l'invention pour la coupe automatique de pièces dans un matériau souple conditionné sous forme de rouleau, ces différentes étapes étant notamment mises en oeuvre à l'aide d'un système de coupe tel que celui décrit en liaison avec la figure 2.

La première étape S1 du procédé consiste à élaborer un placement initial pour une liste de pièces à découper dans le matériau souple.

Le placement est élaboré de manière manuelle ou automatique, le plus souvent par un opérateur dédié (différent de celui manipulant le système de coupe), de façon à optimiser au maximum la consommation de la matière mais aussi pour obtenir un résultat de coupe de haute qualité.

De façon connue, le placement tient compte des contraintes imposées par le support de coupe, telles que par exemple la largeur de laize (qui impose une limitation de la zone de placement) et le type de matériau utilisé (qui impose une distance minimum de proximité entre les pièces), mais également des contraintes imposées par le designer et/ou modéliste, telles que par exemple le respect du droit-fil du tissu et, dans le cas d'un tissu à motif, les contraintes de liaison entre les pièces et de point motif.

En particulier, dans le cas d'un matériau constitué par un tissu à motif, le placement initial est élaboré en prenant en compte les contraintes de liaisons entre les pièces. On pourra par exemple se référer à la demande de brevet FR 20 02947 déposée le 26 mars 2020 par la Demanderesse qui décrit un procédé pour l'élaboration d'un placement de pièces à contraintes de placement de pièces dans un tissu à motif.

L'étape suivante S2 du procédé selon l'invention consiste à étaler une couche de matériau à découper sur la table de coupe.

Typiquement, une fois que l'opérateur aura lancé la production sur le poste de commande, le système de coupe va activer le module d'approvisionnement automatiquement à partir des données matière contenues dans le premier travail de coupe de la liste. Sur le module d'approvisionnement, l'opérateur va pouvoir charger le rouleau correspondant à la matière qui lui est donnée.

Ce module d'approvisionnement est généralement équipé de capteurs et d'actionneurs permettant d'assurer le déroulement du rouleau et une dépose du tissu sans tension, sans pli et bien alignée. Ce module est généralement équipé d'un détecteur de présence de tissu. Ce détecteur peut identifier la fin d'un rouleau. La mesure de la tension du tissu permet également de détecter la fin du rouleau dans le cas où la fin du tissu est collée sur le mandrin central du rouleau.

La matière est alors acheminée sur la table de coupe jusqu'au module de coupe. En fonction de la configuration du système, le tissu peut passer par un module d'acquisition où de nouvelles informations sur la matière sont enregistrées. Ce module d'acquisition peut être un scanner enregistrant et analysant une image de la matière, un simple détecteur placé au-dessus de la lisière du tissu et détectant un repère indiquant la présence d'un défaut sur le tissu ou tout autre dispositif fournissant des informations sur la matière avant la découpe (étape S3).

Cette étape S3 permet de prendre en compte les éventuelles différences qui peuvent exister entre les informations théoriques de la matière (données au préalable dans le travail de coupe) et les informations réelles constatées par l'opérateur ou propre au rouleau en cours de découpe. Ces différences tiennent à des défauts d'impression, des défauts de dépose de tissu sur la table de coupe, des variations de densité de fils du métier à tisser et/ou à des déformations du tissu qui peuvent se traduire par des irrégularités dans le pas de répétition du motif.

Si elles ne sont pas prises en compte, ces différences peuvent avoir une conséquence sur la qualité du résultat de la coupe. Aussi, il est prévu de modifier ou d'ajuster de façon automatique le placement initial (étape S4) pour qu'il puisse correspondre à la réalité du tissu étalé sur la table de coupe. Un exemple de modification du placement initial est décrit dans la publication EP 0,759,708.

L'étape suivante S5 du procédé selon l'invention consiste alors à démarrer la coupe du placement initial (éventuellement modifié au cours de l'étape S4). Cette opération se réalise au niveau du module de coupe du système de coupe.

Au cours de cette étape, le matériau se déplace sur la table de coupe et les différentes pièces sont découpées selon le placement initial éventuellement modifié.

Lorsque les pièces découpées arrivent au niveau du module de déchargement du système de coupe, elles sont récupérées par l'opérateur.

Au cours ou à l'issue de cette étape S5, il est possible qu'un évènement déclencheur Evt se produise. Différents types d'évènements déclencheur sont ici concernés : une détection de la fin du rouleau sur lequel est conditionné le matériau étalé sur la table de coupe, une détection d'un défaut sur le matériau étalé sur la table de coupe, et une détection d'un défaut sur une pièce déjà découpée qui nécessite qu'elle soit recoupée.

Cet évènement déclencheur peut se produire de façon automatique (par exemple dans le cas d'un défaut sur le matériau étalé sur la table de coupe qui peut être détecté par le module d'acquisition du système de coupe) ou de façon manuelle par l'opérateur.

Dans les deux cas, dès qu'un tel évènement déclencheur se produit, il est signalé à l'opérateur et l'information est envoyée au poste de commande pour être traitée.

A réception de cette information, une liste de pièces à conserver est automatiquement élaborée (étape S6 du procédé). Les pièces de cette liste sont les pièces pour lesquelles le nouveau placement élaboré à l'étape suivante S7 ne modifiera pas la position. Par exemple, les pièces déjà découpées et ne nécessitant pas d'être recoupées font partie de cette liste de pièces à conserver.

Au cours de l'étape suivante S7, le module de placement automatique élabore automatiquement un nouveau placement.

Ce nouveau placement est élaboré de façon autonome du placement initial élaboré à l'étape S1. Le nouveau placement prend néanmoins en compte la position des pièces à conserver (issues de l'étape S6) et calcule de nouvelles positions pour tout ou partie des autres pièces (appelées pièces à repositionner), ces nouvelles positions ne prenant pas en compte les positions des pièces à repositionner dans le placement initial. Pa ailleurs, ce nouveau placement respecte les contraintes imposées au placement initial.

Le nouveau placement est élaboré de façon à minimiser toute perte de productivité. En particulier, il est avantageusement élaboré sans interrompre la coupe des pièces à conserver restant à découper selon le placement initial.

Différents exemples d'élaboration du nouveau placement en fonction des différents évènements déclencheurs possibles seront décrits ultérieurement.

Enfin, la dernière étape S8 du procédé consiste à poursuivre la coupe selon le nouveau placement (au niveau du module de coupe du système de coupe). Lorsque les pièces découpées arrivent au niveau du module de déchargement du système de coupe, elles sont alors récupérées par l'opérateur.

Il est à noter qu'un évènement déclencheur peut survenir au cours de l'étape S8 de coupe selon le nouveau placement, auquel cas les étapes S6 à S8 sont réitérées.

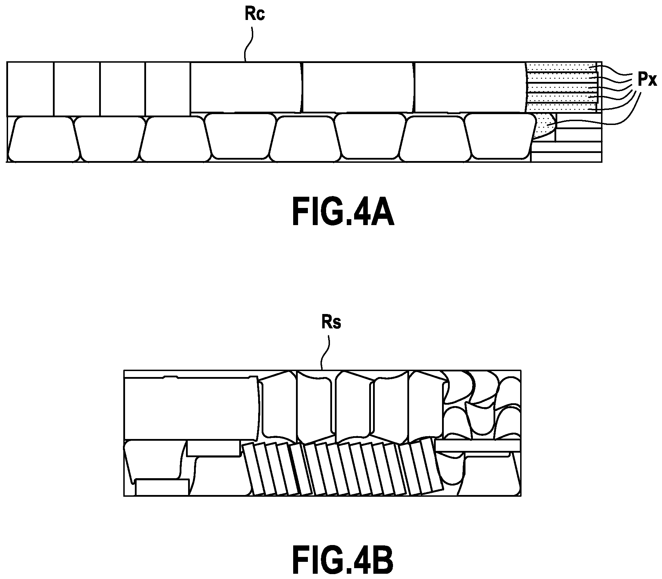

En liaison avec les figures 4A et 4B, on décrira maintenant un exemple de mise en oeuvre de l'élaboration d'un nouveau placement dans le cas d'un évènement déclencheur constitué par la détection de la fin du rouleau sur lequel est conditionné le matériau étalé sur la table de coupe.

Dans cet exemple, la longueur du rouleau courant Rc sur lequel est conditionné le matériau étalé sur la table de coupe n'est pas suffisante pour découper toutes les pièces du placement initial (figure 4A). Les pièces restantes doivent donc être produites sur le rouleau suivant Rs.

Afin de produire les pièces du rouleau suivant Rs (figure 4B), toutes les étapes préalables à la découpe devront être réalisées (notamment chargement de la matière, repérage du placement sur la zone de coupe, etc.). Pour réaliser ces étapes normalement et indépendamment de la réalisation de la fin du rouleau courant Rc, un second travail de coupe va être créé. Ce dernier aura son propre placement (contenant toutes les pièces devant être coupées sur le rouleau suivant).

Dans le cas du traitement de la fin des rouleaux, deux nouveaux placements seront donc nécessaires :
- un premier nouveau placement pour optimiser l'efficience des pièces Px à la fin du rouleau courant Rc
- un second nouveau placement pour optimiser l'efficience des pièces Py associées au rouleau suivant Rs

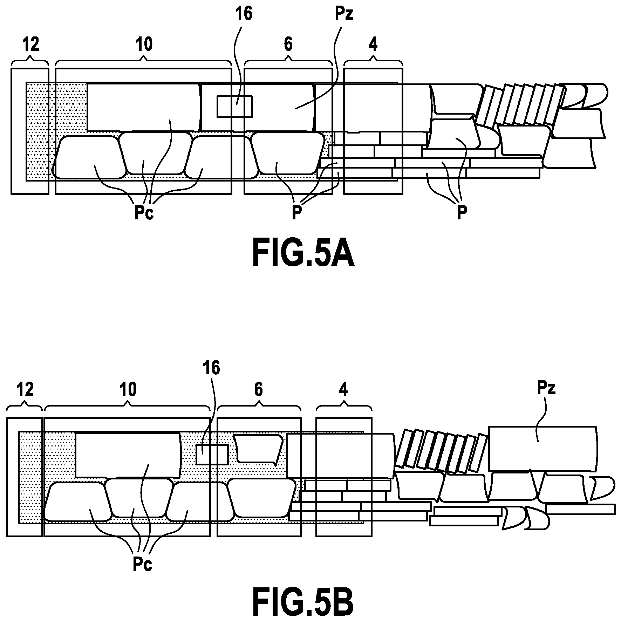

En liaison avec les figures 5A et 5B, on décrira maintenant un exemple de mise en oeuvre de l'élaboration d'un nouveau placement dans le cas d'un évènement déclencheur constitué par la détection lors de la coupe d'un défaut sur le matériau étalé sur la table de coupe.

Sur la figure 5A est représenté un placement de pièces P en cours de coupe par un système de coupe tel que celui décrit en liaison avec la figure 2.

Au cours de la coupe, le module d'acquisition 6 (ou l'opérateur) détecte un défaut sur le matériau étalé sur la table de coupe au niveau d'une zone à défaut 16. Cette zone à défaut 16 est située sur l'emplacement d'une pièce Pz à découper.

Avant de découper des pièces qui deviendraient inexploitables (dont la pièce Pz), le procédé de coupe selon l'invention va élaborer directement un placement nouveau en spécifiant qu'aucune pièce ne devra être placée sur cette zone à défaut 16. Pour cela, la zone de défaut 16 est décrite au module de placement automatique afin d'être exclue du nouveau placement.

La figure 5B représente un résultat envisageable de nouveau placement élaboré dans cette situation.

Préalablement à l'élaboration du nouveau placement, une liste de pièces à conserver est établie (c'est-à-dire les pièces pour lesquelles le nouveau placement ne modifiera pas la position). Dans l'exemple de la figure 5B, il s'agit notamment des pièces Pc situées au niveau du module de coupe 10.

Le nouveau placement est élaboré en prenant en compte la position des pièces à conserver Pc et calcule de nouvelles positions pour tout ou partie des autres pièces (pièces à repositionner). La pièce Pz qui était préalablement située sur la zone à défaut 16 fait notamment partie de ces pièces à repositionner.

Le nouveau placement est également élaboré afin d'optimiser l'utilisation de la matière tout en évitant de produire des pièces sur la zone à défaut.

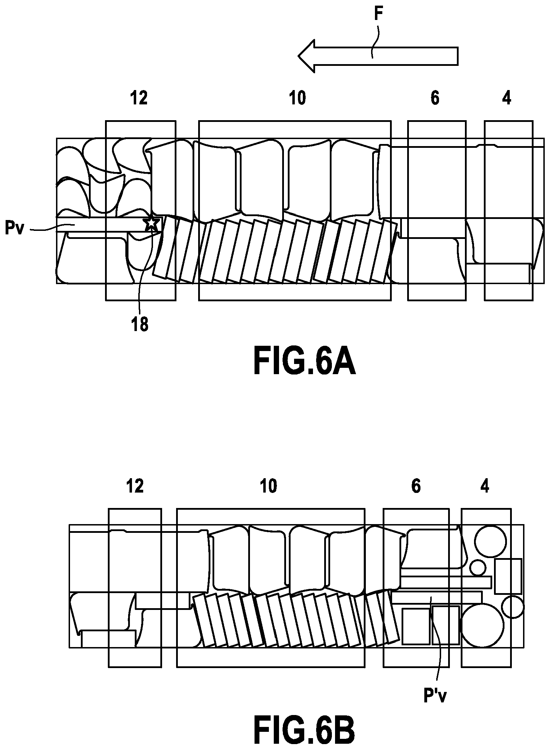

En liaison avec les figures 6A et 6B, on décrira maintenant un exemple de mise en oeuvre de l'élaboration d'un nouveau placement dans le cas d'un évènement déclencheur constitué par la détection d'un défaut sur une pièce découpée qui nécessite qu'elle soit recoupée.

Dans cet exemple, le défaut n'est pas détecté lors de la coupe des pièces mais au moment où elles sont déchargées par l'opérateur au niveau du module de déchargement 12 du système de coupe. Sur la figure 6A, la pièce Pv ayant un défaut 18 a ainsi été identifiée par l'opérateur lors de son déchargement.

Dans une telle situation, la solution connue consistait à recouper cette pièce à défaut en élaborant un placement supplémentaire ne contenant que cette pièce, ce placement supplémentaire étant coupé à la fin du placement en cours (avec comme conséquence d'importantes pertes de matière).

Au contraire, comme représenté sur la figure 6B, le procédé selon l'invention prévoit d'établir une liste de pièces à conserver, puis d'établir un nouveau placement incluant notamment la pièce P'v à recouper.

Le nouveau placement est élaboré afin d'optimiser l'utilisation de la matière en prenant en compte la position des pièces à conserver et calcule de nouvelles positions pour tout ou partie des autres pièces (pièces à repositionner). La pièce à défaut P'v qui doit être recoupée fait notamment partie de ces pièces à repositionner.

Comme la pièce à défaut est détectée comme étant défectueuse lors du déchargement des pièces, il est possible que le placement initial Qi ait été entièrement découpé lors de la détection de cette pièce à défaut.

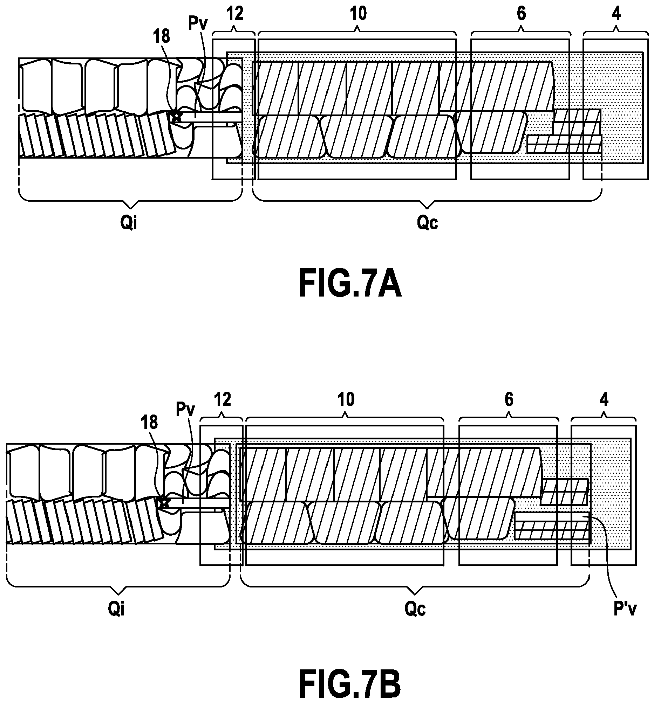

Dans ce cas particulier illustré par les figures 7A et 7B, si le placement en cours Qc (qui suit le placement initial Qi) est réalisé sur le même matériau, la pièce à défaut P'v peut alors être intégrée dans le placement en cours Qc.

En d'autres termes, le nouveau placement élaboré selon l'invention comprend non seulement la pièce à défaut P'v, mais également l'ensemble des pièces appartenant au placement en cours Qc.

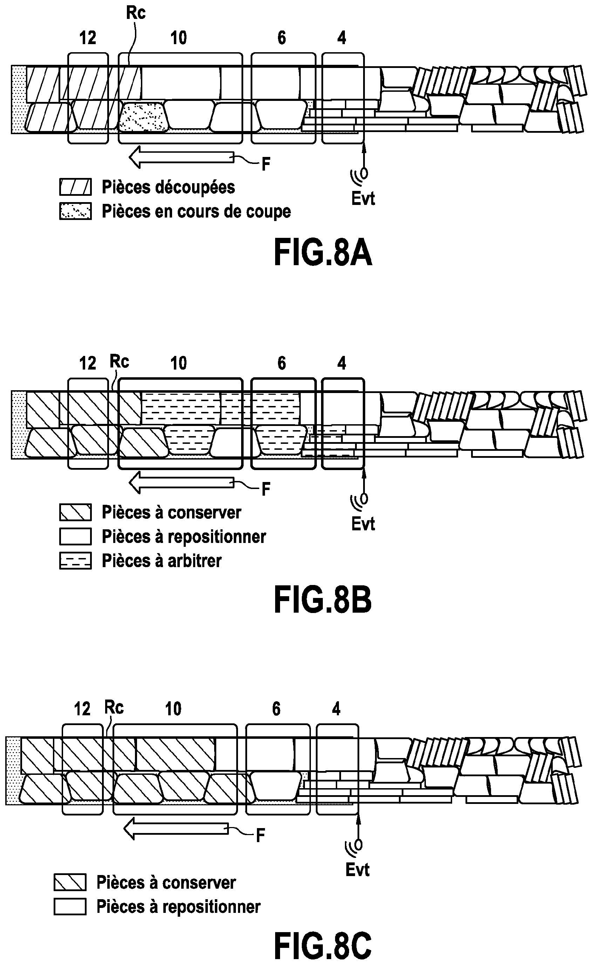

En liaison avec les figures 8A à 8C, on décrira maintenant la manière dont sont établies les listes de pièces à conserver (correspondant à l'étape S6 du procédé selon l'invention) et de pièces à repositionner lors de l'élaboration du nouveau placement (étape S7 du procédé selon l'invention).

Les pièces à conserver sont les pièces pour lesquelles la position dans le nouveau placement ne sera pas modifiée. Les pièces à repositionner sont les pièces dont la position sera recalculée automatiquement pour le nouveau placement.

La figure 8A représente un exemple de placement initial en cours de coupe avec les différents modules du système de coupe disposés d'amont en aval dans le sens d'avance F de la matière : module d'approvisionnement 4, module d'acquisition 6, module de coupe 10 et module de déchargement 12.

Parmi l'ensemble des pièces du placement initial, on distingue les pièces avec hachures qui ont déjà été découpées et la pièce avec des points qui est une pièce en cours de découpe.

Dans cet exemple, l'évènement déclencheur Evt est constitué par la détection de la fin du rouleau courant Rc sur lequel est conditionné le matériau étalé sur la table de coupe.

La figure 8B illustre les différentes catégories auxquelles sont affectées les pièces du placement initial dès détection de l'évènement déclencheur Evt (fin du rouleau), à savoir :
1/ Pièces à conserver (pièces avec hachures) : il s'agit des pièces qui sont déjà découpées ou en cours de coupe. Ces pièces sont donc nécessairement à conserver à leur position initiale et donc placées dans le groupe des « pièces à conserver ».
2/ Pièces à repositionner (pièces vides) : il s'agit des pièces ne pouvant pas conserver leur positionnement initial, car elles ne pourront être correctement coupées (dans l'exemple, ce sont toutes les pièces ne se trouvant pas sur le rouleau courant Rc sur la table de coupe ou celles se trouvant à cheval sur la fin du rouleau courant Rc). Ces pièces sont donc nécessairement à repositionner et donc placées dans le groupe des « pièces à repositionner »..
3/ Pièces à arbitrer (pièces avec pointillés) : les autres pièces du placement.

Il est alors nécessaire de catégoriser chacune des pièces à arbitrer dans l'un des deux groupes (pièces à conserver ou pièces à repositionner).

Le choix de catégorisation de ces pièces à arbitrer doit prendre en compte le fait que dans le but de favoriser l'efficience, toutes ces pièces devraient être considérées comme « à repositionner » (plus le nombre de pièces à repositionner sera important, plus l'algorithme de placement aura de combinaisons possibles, ce qui lui permettra d'aboutir à une meilleure efficience).

Mais il est également nécessaire de tenir compte du fait que dans le but de continuer la production, donc de continuer à couper, toutes les pièces devraient être considérées comme « à conserver » (plus le nombre de pièces à conserver sera important, plus forte sera la probabilité de recevoir le résultat de replacement avant que la machine ne s'arrête de couper).

A cet effet, de façon avantageuse, l'invention prévoit de déterminer le nombre de pièces appartenant au groupe « pièces à conserver » en fonction d'une évaluation de leur temps de coupe et du temps alloué au calcul du nouveau placement.

En effet, ayant une évaluation du temps de coupe de chaque pièce, il est possible d'estimer le temps de coupe restant, c'est-à-dire la somme des temps de coupe de toutes les pièces conservées. Si aucune pièce n'est présente dans le groupe « à conserver » ou qu'elles sont déjà toutes découpées, le temps de coupe restant est nul. Dans ce cas, la coupe s'arrêtera le temps de recevoir le nouveau placement.

Le temps d'élaboration du nouveau placement peut être limité à un temps donné par le logiciel. Ainsi, il est possible d'imposer au module de placement automatique un temps maximum de calcul et de conserver un nombre de pièces dont le temps de coupe correspond à ce temps maximum de calcul (ainsi qu'un éventuel surcout fixe servant de marge).

Cette recherche de pièces est avantageusement réalisée en privilégiant les pièces les plus proches du module de déchargement 12. Ce choix, arbitraire, permet de maintenir une fluidité du processus en proposant à l'opérateur des pièces à décharger.

Le résultat obtenu est illustré sur la figure 8C sur laquelle les pièces à arbitrer de la figure 8B ont été catégorisées dans l'un des deux groupes (pièces à conserver : pièces avec hachures ; et pièces à repositionner : pièces vides).

On notera que le choix de catégorisation de ces pièces à arbitrer (dans l'un des deux groupes : pièces à conserver ou pièces à repositionner) peut également dépendre du fait que certaines pièces à arbitrer possèdent une contrainte de placement (cas d'un matériau à découper constitué par un tissu à motif) ou une contrainte de proximité.

En particulier, quand il s'agit d'un placement sur un matériau à motif, les contraintes de liaisons entre les pièces interviennent, et la catégorisation des pièces à arbitrer doit en tenir compte.

En effet, lors de l'existence d'une contrainte de liaison entre deux pièces, la notion de pièce *maîtresse* et pièce *fille* apparaît. La pièce *maîtresse* donne les indications de son positionnement à la pièce *fille* de façon à ce que celle-ci se positionne correctement. Une pièce *fille* ne peut donc pas se positionner si sa pièce *maîtresse* ne l'a pas été. Ceci explique qu'une pièce *fille* ne pourra pas être attribuée au groupe « à conserver » si de l'autre côté sa pièce *maîtresse* a été mise dans le groupe « à repositionner ».

Il faut également prendre en compte la possibilité qu'une pièce *fille* peut elle-même être pièce *maîtresse* d'une autre pièce, de même qu'une pièce *maîtresse* peut elle-même être pièce *fille* d'une autre pièce.

Dans ce contexte, dès lors qu'une pièce *maîtresse* est attribuée au groupe « à repositionner », toutes ses pièces *filles* le sont également.

Dans le cas où la pièce *maîtresse* est attribuée au groupe « à conserver », toutes ses pièces *filles* pourront être placées dans le groupe « à repositionner » en tenant compte de leur contrainte imposée par la pièce *maîtresse.*

Quant aux pièces possédant une contrainte de proximité, on distinguera :
1/ Contrainte de proximité/alignement (contrainte de qualité) qui oblige deux pièces à conserver leur placement relatif l'une par rapport à l'autre, afin d'assurer par exemple, la parfaite continuité du fil.
   Ces pièces forment un bloc de pièces fixe et indivisible. Cela signifie que ces pièces seront soit toutes attribuées au groupe « à conserver » sur le rouleau courant, soit toutes attribuées au groupe « à repositionner » et placées sur le rouleau suivant, en conservant leur positionnement relatif.
2/ Contrainte de proximité limitant la distance entre les pièces liées et leur maîtresse:
   - soit pour garantir la coupe des pièces (proximité -X) : cette « proximité - X » est la distance limitant l'éloignement de la pièce maîtresse de sa « fille », lorsque cette dernière est placée avant sa maîtresse, afin qu'elles soient toutes deux, dans la même fenêtre de coupe ;
   - soit pour garantir la qualité du produit (stabilité de la couleur sur rouleau dont le bain se dégrade sur la longueur), la distance entre pièce maîtresse et pièces liées peut être limitée sur tous les autres axes : proximité +X pour limiter la distance entre pièce maîtresse et pièce liée quand celle-ci est placée après la maîtresse, proximité +Y / -Y pour limiter la distance entre pièce liée et pièce maîtresse quand la première est placée au-dessus - respectivement au-dessous - de la pièce maîtresse).

Dans ce cas, ces pièces forment également un bloc de pièces fixe et indivisible, de sorte que ces pièces seront soit toutes attribuées au groupe « à conserver » sur le rouleau courant, soit toutes attribuées au groupe « à repositionner » et placées sur le rouleau suivant, en conservant leur positionnement relatif. Néanmoins, cette contrainte n'est pas toujours respectée. C'est en particulier le cas lorsqu'une pièce du groupe est déjà découpée et doit être conservée alors qu'une autre pièce doit nécessairement être repositionnée.

Une fois réalisée l'attribution à l'un des deux groupes des pièces à arbitrer, la production peut reprendre (si elle a été interrompue) ou se poursuivre (si elle n'a pas été interrompue) en parallèle de l'élaboration du nouveau placement automatique (étape S7 du procédé).

En plus des contraintes de placement ou de proximité associées à chaque pièce ou imposées par la matière, il est nécessaire de préciser de nouvelles informations en vue de l'établissement du nouveau placement.

Comme nous l'avons vu précédemment, le temps d'élaboration du nouveau placement est limité par le temps de coupe restant. De plus, le traitement peut être interrompu si une certaine valeur d'efficience est atteinte.

Le système peut donc paramétrer l'élaboration du nouveau placement automatique en donnant un temps de calcul maximum et une efficience cible.

Par ailleurs, les dimensions de la zone pour le nouveau placement vont dépendre de la matière sur laquelle le nouveau placement va être réalisé. Ces dimensions dépendent du contexte du nouveau placement, à savoir :
1/ La largeur qui peut être donnée par la largeur de laize mesurée sur machine, ou récupérée des caractéristiques matières, une limitation peut être donnée par la largeur de laize mesurée sur machine, ou récupérée des caractéristiques matières.
2/ Une limitation de placement Xmax peut être imposée. Dans le cas où la fin de rouleau est connue, elle est définie par la détection de la fin de rouleau. Dans le cas où la fin de rouleau n'est pas connue, alors cette limitation est infinie.
2/ Une limitation de placement Xmin peut être précisée pour éviter de positionner des pièces sur une zone qui deviendrait inaccessible par le module de coupe avec la poursuite de la coupe. En effet, la coupe se poursuivant, le module de coupe et le module de placement automatique partagent la position limite qui pourra être évacuée de la zone de coupe. Cette position sera la valeur utilisable par le module de placement. Ce Xmin doit prendre en compte la place laissée accessible par les pièces à repositionner, et les zones inaccessibles par le module de coupe ou par les pièces conservées.

Pour chaque pièce à conserver Pc(i), le maximum Max(i) est calculé, et pour chaque pièce à repositionner Pr(j), le minimum Min(j) est calculé. La limitation Xmin sera égale au plus grand des Max(i) inférieur à l'ensemble des Min(j). Le module de coupe devra garantir que cette position de placement ne sera pas évacuée de la zone de coupe.

Pendant l'élaboration automatique du nouveau placement, la production peut reprendre, ce qui permet à la coupe des pièces conservées de continuer, ainsi que leur déchargement. Cependant, pour éviter d'amener de la matière utilisable pour le placement des pièces dans une zone inaccessible au module de coupe, les avances du convoyeur doivent être limitées à la même valeur que la position Xmin du placement des pièces autorisées.

Ainsi limitée, la production peut reprendre son cours : le repositionnement des pièces sera toujours limité dans une zone accessible par le module de coupe quel que soit les avances du convoyeur.

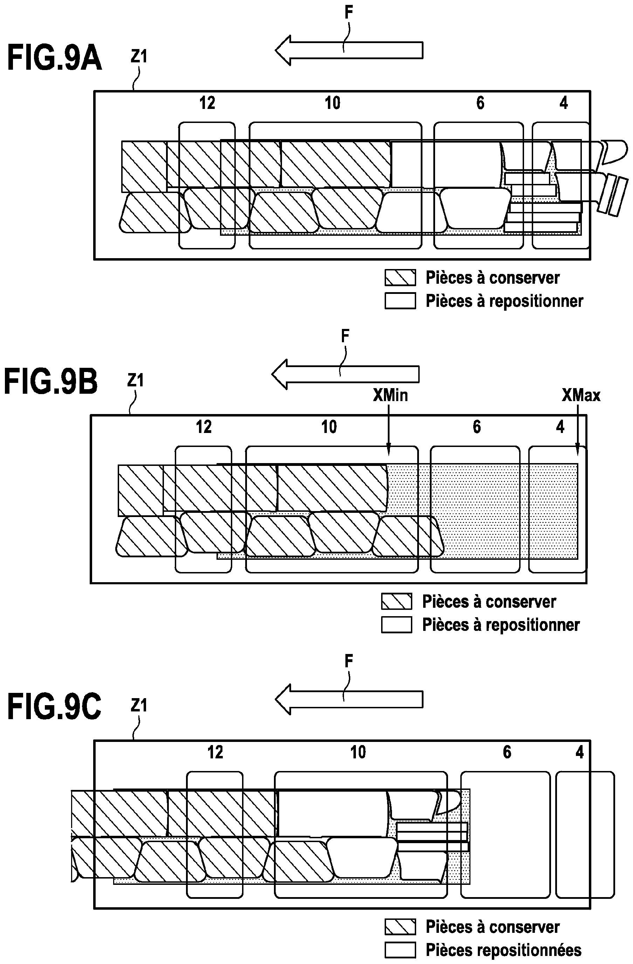

Les figures 9A à 9C représentent les différentes étapes d'un exemple de mise en oeuvre des caractéristiques du nouveau placement selon le procédé de l'invention.

Sur la figure 9A est ainsi représentée la zone possible Z1 sur la surface de la table de coupe pour le nouveau placement, ainsi que les pièces du placement initial appartenant au groupe « à conserver » et celles appartenant au groupe « à repositionner ».

Sur la figure 9B sont représentées les informations envoyées au module de placement automatique pour l'élaboration du nouveau placement, à savoir : les limitations de placement Xmax et Xmin qui définissent les limites pour l'élaboration du nouveau placement, les pièces à conserver qui sont placées, et une liste de pièces à repositionner qui ne sont plus placées.

Enfin, la figure 9C montre l'emplacement du nouveau placement élaboré pour les pièces repositionnées.

Par ailleurs, comme décrit précédemment, le cas des placements sur matière à motifs rajoute les contraintes de liaisons entre pièces. De plus, au moment du choix de catégorisation des pièces « à conserver » ou « à repositionner », une pièce *fille* peut être séparée de sa pièce *maîtresse.* De plus, même si la pièce *fille* et la *maîtresse* appartiennent au groupe « à repositionner », rien ne garantit que les deux pièces puissent être positionnées sur le même placement.

Dans le cas où la pièce *maîtresse* est positionnée sur le premier nouveau placement et la pièce *fille* sur le second nouveau placement, un traitement assez similaire à celui exposé dans la demande de brevet FR 20 02947 déposée le 26 mars 2020 par la Demanderesse est mis en place. Il revient à transformer le point de liaison de la pièce *fille* en point motif afin de garantir que cette pièce puisse être traitée indépendamment de sa pièce *maîtresse.*

Contrairement au cas de figure de la demande de brevet FR 20 02947, la position définitive de la pièce *maîtresse* peut ne pas être connue au moment de cette transformation. Pour obtenir un résultat qui reste acceptable, une extrapolation de la position réelle de la pièce va être faite en fonction de la longueur du pas réel. Une grille (théorique réelle) va être construite à partir de la grille théorique mais en prenant comme longueur de pas le pas qui est réellement mesuré au moment de la découpe (la valeur moyenne des deux dernières lignes).

Si une pièce est liée à deux pièces *maîtresses* (une selon chaque axe) en deux points d'accroche différents, alors le point motif créé sera calculé à partir de l'intersection (projection sur chaque axe) des points d'accroche à partir de la position extrapolée des pièces *maîtresses.*

Dans le cas contraire où une pièce *fille* est placée dans le premier nouveau placement et la pièce *maîtresse* dans le second nouveau placement, la position extrapolée de la pièce *maîtresse* ne peut pas être connue (notamment du fait que le pas réel du nouveau rouleau n'est pas connu). La transformation du point de liaison en point motif ne peut être appliquée. Cette pièce ne pourra donc pas être traitée. Afin de ne pas se retrouver dans ce cas de figure, un paramètre du module de placement automatique permet de garantir qu'une pièce ne sera positionnée dans un nouveau placement que si toutes ses pièces *maîtresses* le sont déjà.

On décrira à présent de la façon dont la productivité peut être améliorée.

L'objectif du nouveau placement est de répondre à une problématique nécessitant une modification du placement initial en impactant le moins possible la productivité. A cet effet, le temps de calcul du nouveau placement sera masqué par la découpe de pièces qui ont été conservées dans leur position initiale. Cela implique donc que le temps alloué pour la réalisation du nouveau placement est fixe.

Dans certains cas, le temps de calcul sera court car la problématique à résoudre implique une grande réactivité. C'est le cas par exemple de la détection des défauts quand la zone de matière qui ne peut pas être utilisée est connue peu de temps avant que les pièces qui sont dessus soient coupées. Ainsi, peu de pièces pourront être attribuées au groupe « à conserver », et donc le temps de placement sera court.

Dans le cas où l'évènement déclencheur se produit loin de la fin du placement initial, de nombreuses pièces vont devoir être replacées. Compte tenu de la contrainte de temps de placement expliquée précédemment, le résultat du placement peut ne pas être satisfaisant. Dans ce cas, une seconde phase d'optimisation pourra être appliquée. Elle fonctionnera de façon analogue à la première (conserver des pièces à couper pour masquer le temps de calcul et replacer les autres). Cette fois, un nombre de pièces plus important sera conservé afin de permettre au module de placement automatique d'élaborer un second placement mais avec un temps de calcul plus important. Les pièces de ce second résultat (meilleur que le premier), pourront être intégrées dans le placement en cours de coupe et ce sans interruption.

## Revendications

1. Procédé pour la coupe automatique de pièces dans un matériau souple conditionné sous forme de rouleau, comprenant les étapes successives de :
a) élaboration d'un placement initial (S1) pour une liste de pièces à découper dans le matériau souple ;
b) étalement (S2) d'au moins une couche de matériau souple sur une table de coupe ;
c) démarrage (S5) de la coupe automatique des pièces dans le matériau étalé sur la table de coupe selon le placement initial ; et **caractérisé par** les étapes successives de :
d) au cours de la coupe du placement initial, à réception d'un évènement déclencheur (Evt) pour lequel le placement d'au moins l'une des pièces n'est plus adapté à l'environnement de coupe ou pour lequel la liste des pièces du placement initial doit être modifiée, élaboration d'une liste de pièces à conserver (S6) ; et
e) élaboration automatique d'un nouveau placement (S7) prenant en compte la position des pièces à conserver et calculant de nouvelles positions pour tout ou partie des autres pièces - appelées pièces à repositionner - sans prendre en compte leurs positions dans le placement initial.

2. Procédé selon la revendication 1, dans lequel l'étape e) est suivie d'une étape f) de coupe automatique (S8) des pièces dans le matériau étalé sur la table de coupe selon le nouveau placement.

3. Procédé selon l'une des revendications 1 et 2, dans lequel le nouveau placement élaboré à l'étape e) comprend tout ou partie des pièces du placement initial restant encore à découper.

4. Procédé selon la revendication 3, dans lequel le nouveau placement élaboré à l'étape e) comprend en outre une ou plusieurs pièces pour lesquelles le placement n'est plus adapté à l'environnement de coupe.

5. Procédé selon l'une des revendications 3 et 4, dans lequel l'étape d) comprend la détermination du nombre des pièces à conserver restant encore à découper en fonction d'une évaluation de leur temps de coupe et du temps alloué au calcul du nouveau placement.

6. Procédé selon la revendication 5, dans lequel le temps alloué au calcul du nouveau placement est inférieur à l'évaluation du temps de coupe des pièces à conserver restant encore à découper.

7. Procédé selon l'une quelconque des revendications 3 à 6, dans lequel la sélection des pièces du nouveau placement parmi l'ensemble des pièces du placement initial restant encore à découper est réalisée en respectant d'éventuelles contraintes de placement desdites pièces.

8. Procédé selon l'une quelconque des revendications 1 à 7, dans lequel l'évènement déclencheur est choisi parmi : une détection de la fin du rouleau sur lequel est conditionné le matériau étalé sur la table de coupe, une détection d'un défaut sur le matériau étalé sur la table de coupe, et une détection d'un défaut sur une pièce découpée qui nécessite qu'elle soit recoupée.

9. Procédé selon la revendication 8, dans lequel, lorsque l'évènement déclencheur consiste en la détection de la fin du rouleau sur lequel est conditionné le matériau étalé sur la table de coupe, l'étape e) comprend l'établissement d'un premier placement de pièces sur la fin du rouleau, et un second placement des pièces restantes sur un autre rouleau de matériau.

10. Procédé selon la revendication 8, dans lequel, lorsque l'évènement déclencheur consiste en la détection d'un défaut sur le matériau étalé sur la table de coupe, l'étape e) comprend l'exclusion de la zone du matériau étalé sur laquelle est présent le défaut pour établir le nouveau placement.

11. Procédé selon la revendication 8, dans lequel, lorsque l'évènement déclencheur consiste en la détection d'un défaut sur une pièce découpée qui nécessite qu'elle soit recoupée, l'étape e) comprend l'ajout de la pièce à défaut au nouveau placement.

12. Procédé selon l'une quelconque des revendications 1 à 11, dans lequel le nouveau placement de l'étape e) est élaboré de façon à minimiser toute perte de productivité.

13. Procédé selon la revendication 12, dans lequel l'étape e) est réalisée sans interruption de la coupe des pièces à conserver restant à découper selon le placement initial.

14. Procédé selon l'une quelconque des revendications 1 à 13, dans lequel l'étape e) d'élaboration du nouveau placement est réalisée de manière itérative afin d'obtenir un taux d'efficience le plus élevé possible.

15. Procédé selon l'une quelconque des revendications 1 à 14, dans lequel l'étape c) comprend une étape préalable de modification du placement initial pour générer un placement réel des pièces sur le matériau étalé qui prend en compte les caractéristiques réelles du matériau.

16. Système pour la coupe automatique de pièces dans un matériau souple conditionné sous forme de rouleau, comprenant :
- des moyens d'élaboration d'un placement initial d'une liste de pièces à découper dans le matériau souple ;
- une table de coupe sur laquelle peut être étalée au moins une couche de matériau souple ;
- des moyens de coupe automatique des pièces dans le matériau étalé sur la table de coupe selon le placement initial ; et **caractérisé par** :
- des moyens de réception au cours de la coupe du placement initial d'un évènement déclencheur pour lequel le placement d'au moins l'une des pièces n'est plus adapté à l'environnement de coupe ou pour lequel la liste des pièces du placement initial doit être modifiée ; et
- des moyens d'élaboration automatique d'une liste de pièces à conserver et d'un nouveau placement prenant en compte la position des pièces à conserver et calculant de nouvelles positions pour tout ou partie des autres pièces - appelées pièces à repositionner - sans prendre en compte leurs positions dans le placement initial.

## Patentansprüche

1. Verfahren zum automatischen Schneiden von Teilen aus einem flexiblen Material, das in Rollenform verpackt ist, umfassend die aufeinanderfolgenden Schritte der/des:
a) Ausarbeitung einer Anfangsplatzierung (S1) für eine Reihe von aus dem flexiblen Material zuzuschneidenden Teilen,
b) Ausbreitung (S2) mindestens einer Schicht eines flexiblen Materials auf einem Schneidetisch,
c) Starts (S5) des automatischen Schneidens der Teile aus dem auf dem Schneidetisch ausgebreiteten Material gemäß Anfangsplatzierung,
und **gekennzeichnet durch** die aufeinanderfolgenden Schritte der:
d) während des Schneidens der Anfangsplatzierung, bei Empfang eines auslösenden Ereignisses (Ereig.), wobei die Platzierung mindestens eines der Teile nicht mehr für die Schneidumgebung geeignet ist oder wobei die Liste der Teile der Anfangsplatzierung abgeändert werden muss, Ausarbeitung einer Liste von aufzubewahrenden Teilen (S6), und
e) automatischen Ausarbeitung einer neuen Platzierung (S7) unter Berücksichtigung der Position der aufzubewahrenden Teile und Berechnen von neuen Positionen für alle oder einen Teil der anderen Teile - als neu zu positionierende Teile bezeichnet -, ohne ihre Positionen in der Anfangsplatzierung zu berücksichtigen.

2. Verfahren nach Anspruch 1, wobei auf Schritt e) ein Schritt f) des automatischen Schneidens (S8) der Teile aus dem auf dem Schneidetisch ausgebreiteten Material gemäß der neuen Platzierung folgt.

3. Verfahren nach einem der Ansprüche 1 und 2, wobei die neue Platzierung, die in Schritt e) ausgearbeitet wurde, alle oder einen Teil der Teile der Anfangsplatzierung umfasst, die noch zuzuschneiden sind.

4. Verfahren nach Anspruch 3, wobei die neue Platzierung, die in Schritt e) ausgearbeitet wurde, ferner ein oder mehrere Teile umfasst, für welche die Platzierung nicht mehr für die Schneidumgebung geeignet ist.

5. Verfahren nach einem der Ansprüche 3 und 4, wobei der Schritt d) die Bestimmung der Anzahl der aufzubewahrenden Teile, die noch zuzuschneiden sind, entsprechend einer Bewertung ihrer Schneidzeit und der für die Berechnung der neuen Platzierung vorgesehenen Zeit umfasst.

6. Verfahren nach Anspruch 5, wobei die für die Berechnung der neuen Platzierung vorgesehene Zeit unter der Bewertung der Schneidzeit für die aufzubewahrenden Teile, die noch zuzuschneiden sind, liegt.

7. Verfahren nach einem der Ansprüche 3 bis 6, wobei die Auswahl der Teile der neuen Platzierung aus der Gesamtheit der Teile der Anfangsplatzierung, die noch zuzuschneiden sind, unter Berücksichtigung eventueller Anforderungen an die Platzierung der Teile durchgeführt wird.

8. Verfahren nach einem der Ansprüche 1 bis 7, wobei das auslösende Ereignis ausgewählt wird aus: einer Erfassung des Endes der Rolle, auf welcher das auf dem Schneidtisch ausgebreitete Material verpackt ist, einer Erfassung eines Defekts an dem auf dem Schneidtisch ausgebreiteten Material und einer Erfassung eines Defekts an einem zugeschnittenen Teil, das eines Neuzuschnitts bedarf.

9. Verfahren nach Anspruch 8, wobei der Schritt e), wenn das auslösende Ereignis aus der Erfassung des Endes der Rolle besteht, auf welcher das auf dem Schneidtisch ausgebreitete Material verpackt ist, die Einrichtung einer ersten Platzierung von Teilen auf dem Ende der Rolle und eine zweite Platzierung der restlichen Teile auf einer anderen Materialrolle umfasst.

10. Verfahren nach Anspruch 8, wobei der Schritt e), wenn das auslösende Ereignis aus der Erfassung eines Defekts an dem auf dem Schneidtisch ausgebreiteten Material besteht, den Ausschluss des Bereichs des ausgebreiteten Materials umfasst, auf dem der Defekt besteht, um die neue Platzierung einzurichten.

11. Verfahren nach Anspruch 8, wobei der Schritt e), wenn das auslösende Ereignis aus der Erfassung eines Defekts an einem zugeschnittenen Teil besteht, das eines Neuzuschnitts bedarf, die Hinzugabe des defekten Teils zu einer neuen Platzierung umfasst.

12. Verfahren nach einem der Ansprüche 1 bis 11, wobei die neue Platzierung des Schritts e) ausgearbeitet wird, um jeglichen Produktivitätsverlust zu minimieren.

13. Verfahren nach Anspruch 12, wobei der Schritt e) ohne Unterbrechung des Schneidens der aufzubewahrenden Teile, die gemäß der Anfangsplatzierung noch zuzuschneiden sind, durchgeführt wird.

14. Verfahren nach einem der Ansprüche 1 bis 13, wobei der Schritt e) der Ausarbeitung einer neuen Platzierung iterativ durchgeführt wird, um eine größtmögliche Effizienz zu erlangen.

15. Verfahren nach einem der Ansprüche 1 bis 14, wobei der Schritt c) einen vorherigen Schritt der Abänderung der Anfangsplatzierung umfasst, um eine tatsächliche Platzierung der Teile auf dem ausgebreiteten Material zu erzeugen, welche die tatsächlichen Merkmale des Materials berücksichtigt.

16. System zum automatischen Schneiden von Teilen aus einem flexiblen Material, das in Rollenform verpackt ist, umfassend:
- Mittel zur Ausarbeitung einer Anfangsplatzierung einer Reihe von aus dem flexiblen Material zuzuschneidenden Teilen,
- einen Schneidetisch, auf welchem mindestens eine Schicht eines flexiblen Materials ausgebreitet werden kann,
- Mittel für das automatische Schneiden der Teile aus dem auf dem Schneidetisch ausgebreiteten Material gemäß Anfangsplatzierung,
und **gekennzeichnet durch**:
- Mittel zur Aufnahme während des Schneidens der Anfangsplatzierung eines auslösenden Ereignisses, wobei die Platzierung mindestens eines der Teile nicht mehr für die Schneidumgebung geeignet ist oder wobei die Liste der Teile der Anfangsplatzierung abgeändert werden muss, und
- Mittel zur automatischen Ausarbeitung einer Liste von aufzubewahrenden Teilen und einer neuen Platzierung unter Berücksichtigung der Position der aufzubewahrenden Teile und Berechnen von neuen Positionen für alle oder einen Teil der anderen Teile - als neu zu positionierende Teile bezeichnet -, ohne ihre Positionen in der Anfangsplatzierung zu berücksichtigen.

## Claims

1. A method for automatically cutting parts in a flexible material packaged in the form of a roll, comprising the successive steps of:
a) preparing an initial placement (S1) for a list of parts to be cut out in the flexible material;
b) spreading (S2) at least one layer of flexible material on a cutting table;
c) starting (S5) the automatic cutting of the parts in the material spread on the cutting table according to the initial placement;
and **characterised by** the successive steps of:
d) during the cutting of the initial placement, upon receipt of a triggering event (Evt) for which the placement of at least one of the parts is no longer adapted to the cutting environment or for which the list of the parts of the initial placement needs to be modified, preparing a list of parts to be maintained (S6); and
e) automatically preparing a new placement (S7) taking into account the position of the parts to be maintained and calculating new positions for all or part of the other parts - called parts to be repositioned - without taking into account their positions in the initial placement.

2. The method according to claim 1, wherein step e) is followed by a step f) of automatically cutting (S8) the parts in the material spread on the cutting table according to the new placement.

3. The method according to any of claims 1 and 2, wherein the new placement prepared in step e) comprises all or part of the parts of the initial placement that are still to be cut out.

4. The method according to claim 3, wherein the new placement prepared in step e) further comprises one or several parts for which the placement is no longer adapted to the cutting environment.

5. The method according to any of claims 3 and 4, wherein step d) comprises the determination of the number of the parts to be maintained that are still to be cut out according to an evaluation of their cutting time and to the time allocated to the calculation of the new placement.

6. The method according to claim 5, wherein the time allocated to the calculation of the new placement is less than the evaluation of the cutting time of the parts to be maintained that are still to be cut out.

7. The method according to any one of claims 3 to 6, wherein the selection of the parts of the new placement among all the parts of the initial placement that are still to be cut out is made by meeting any constraints of placement of said parts.

8. The method according to any one of claims 1 to 7, wherein the triggering event is chosen among: a detection of the end of the roll on which the material spread on the cutting table is packaged, a detection of a defect on the material spread on the cutting table, and a detection of a defect on a cut out part that needs to be recut.

9. The method according to claim 8, wherein, when the triggering event consists of the detection of the end of the roll on which the material spread on the cutting table is packaged, step e) comprises the establishment of a first placement of parts on the end of the roll, and a second placement of the remaining parts on another roll of material.

10. The method according to claim 8, wherein, when the triggering event consists of the detection of a defect on the material spread on the cutting table, the step e) comprises the exclusion of the area of the spread material on which the defect is present in order to establish the new placement.

11. The method according to claim 8, wherein, when the triggering event consists of the detection of a defect on a cut out part that needs to be recut, step e) comprises the addition of the defect part to the new placement.

12. The method according to any one of claims 1 to 11, wherein the new placement of step e) is prepared so as to minimize any loss of productivity.

13. The method according to claim 12, wherein step e) is carried out without interrupting the cutting of the parts to be maintained that are still to be cut out according to the initial placement.

14. The method according to any one of claims 1 to 13, wherein step e) of preparing the new placement is carried out iteratively in order to obtain the highest possible efficiency rate.

15. The method according to any one of claims 1 to 14, wherein step c) comprises a prior step of modifying the initial placement to generate an actual placement of the parts on the spread material which takes into account the actual characteristics of the material.

16. A system for automatically cutting parts in a flexible material packaged in the form of a roll, comprising:
- means for preparing an initial placement of a list of parts to be cut out in the flexible material;
- a cutting table on which at least one layer of flexible material can be spread;
- means for automatically cutting the parts in the material spread on the cutting table according to the initial placement;
and **characterised in that**:
- means for receiving, during the cutting of the initial placement, a triggering event for which the placement of at least one of the parts is no longer adapted to the cutting environment or for which the list of the parts of the initial placement needs to be modified; and
- means for automatically preparing a list of parts to be maintained and a new placement taking into account the position of the parts to be maintained and calculating new positions for all or part of the other parts - called parts to be repositioned - without taking into account their positions in the initial placement.
